# EUROPÄISCHE PATENTSCHRIFT

(11) **EP 3 071 144 B1**
(45) Veröffentlichungstag und Bekanntmachung des Hinweises auf die Patenterteilung: **16.01.2019**
(21) Anmeldenummer: 14815250.7
(22) Anmeldetag: 19.11.2014
(51) Int. Cl.: A61C 19/00, A61C 1/08, G10K 11/178

(54) **DENTALINSTRUMENT MIT EINER VORRICHTUNG ZUR GERÄUSCHREDUKTION**
DENTAL INSTRUMENT WITH A DEVICE FOR NOISE REDUCTION
INSTRUMENT DENTAIRE AVEC UN DISPOSITIF DE RÉDUCTION DU BRUIT

(30) Priorität: 20.11.2013 DE 102013223729; 24.12.2013 DE 102013227158
(43) Veröffentlichungstag der Anmeldung: 28.09.2016
(73) Patentinhaber: Nitzschke, Christian, 53227 Bonn (DE)
(72) Erfinder: Nitzschke, Christian, 53227 Bonn (DE)
(74) Vertreter: Freischem & Partner Patentanwälte mbB
(86) Internationale Anmeldenummer: PCT/EP2014/075035
(87) Internationale Veröffentlichungsnummer: WO 2015/075075

(56) Entgegenhaltungen:
- DE-U1-202004 001 300
- KR-U- 20110 000 202
- US-A1- 2012 300 956
- US-B1- 6 463 316
- KAYMAK E ET AL: "Active noise control on high frequency narrow band dental drill noise: Preliminary results", 14TH INTERNATIONAL CONGRESS ON SOUND AND VIBRATION 2007, ICSV14, CAIRNS, AUSTRALIA, Bd. 1, 9. Juli 2007 (2007-07-09), - 12. Juli 2007 (2007-07-12), Seiten 741-747, XP002736686, AUSTRALIAN ACOUSTICAL SOCIETY AUS

## Beschreibung

Die Erfindung betrifft ein Dentalinstrument mit einer Vorrichtung zur Geräuschreduktion zur zahnärztlichen Behandlung eines Patienten mit den Merkmalen des Oberbegriffs des Patentanspruchs 1 sowie ein Verfahren zur Geräuschreduktion für ein derartiges Dentalinstrument mit den Merkmalen des Oberbegriffs des Anspruchs 7.

Die Vorrichtung zur Geräuschreduktion für ein Dentalinstrument weist folgende Merkmale auf:
- mindestens ein am Dentalinstrument angeordneter Schallsensor,
- mindestens ein am Dentalinstrument angeordneter Schallerzeuger,
- mindestens ein elektronisches Steuerungsmodul, welches mit dem Schallsensor und dem Schallerzeuger verbunden ist, um die von dem Schallsensor aufgenommenen Schallsignale zu analysieren, Signale zur aktiven Lärmkompensation zu berechnen und zu dem Schallerzeuger zu leiten.

Die Erzeugung von Antischall, auch aktive Lärmkompensation genannt, ist ein bewährtes Verfahren zur Reduktion des am Trommelfell eintreffenden Schalls und damit zur Reduktion des Geräuschpegels, der subjektiv von einer Person wahrgenommen wird. Hierzu ist mindestens ein Schallsensor erforderlich, üblicherweise ein Mikrofon, welches den Umgebungsschall aufnimmt, sowie ein Schallerzeuger, üblicherweise ein Lautsprecher, der Antischall erzeugt, um mittels destruktiver Interferenz die Umgebungsgeräusche auszulöschen. Hochleistungsfähige Prozessoren berechnen aus dem durch den Schallsensor aufgenommenen Schallsignal den Signalverlauf des Antischalls, der für eine möglichst effektive Kompensation erforderlich ist. Derartige Prozessoren sind Bestandteile eines elektronischen Steuermoduls, das mit dem Schallsensor und dem Schallerzeuger verbunden ist.

Die Verwendung von Antischall bei der Zahnbehandlung wurde bereits in der Vergangenheit vorgeschlagen. So offenbart die DE 10 2007 054 051 ein System und Verfahren zur Verringerung der Belastung eines Patienten bei der Zahnbehandlung, wobei über einen Tonkanal die Behandlungsgeräusche durch Gegenkopplung gedämpft werden. Insbesondere wird über einen Lautsprecher im Kopfteil eines Behandlungsstuhls ein Gegenschall erzeugt, der die Ohren des Patienten schützt. Ein ähnlicher Vorschlag geht aus der WO 02/100287 A2 hervor. Durch ein Kehlkopfmikrofon des Zahnarztes wird hier sichergestellt, dass der Patient gesprochene Worte des Zahnarztes wahrnimmt.

Die Druckschrift US 5,692,056 offenbart ein Antischall-Verfahren zur Reduktion des über die Schädelknochen des Patienten übertragenen Schalls. Ein ähnliches Verfahren geht aus der US 6,466,673 B1 hervor.

Die Druckschrift JP 2006-181257 A offenbart ein Geräuschreduktionssystem für Dentalgeräte. Der Schall wird mit Lautsprechern nahe den Ohren der Patienten reduziert. Ein Mikrofon ist am Handstück angeordnet, ermöglicht aber keine vollständige Geräuschunterdrückung, so dass weitere Mikrofone nahe den Ohren der Patienten angeordnet sind.

Das koreanische Gebrauchsmuster KR 20-2011-0000202 beschreibt ein aktives Lärmkontrollsystem für den Griff eines Dentalinstruments. Hier wird am hinteren Abschnitt des Griffes eine aktive Lärmkontrollvorrichtung angebracht, die eine Signalmessvorrichtung und eine Schallausgabevorrichtung zur Lärmkontrolle aufweist. Zusätzlich wird vorgeschlagen, nahe den Ohren des Patienten und der behandelnden Personen zusätzliche Lärmkontrollvorrichtungen vorzusehen, um den Restschall weiter zu reduzieren. Die aktive Lärmkontrollvorrichtung wird mittels eines elastischen Ringclips lösbar an dem Dentalinstrument befestigt. Der Ringclip kann auf dem Dentalinstrument leicht verrutschen.

Aufgabe der Erfindung ist es, eine Vorrichtung und ein Verfahren zur Geräuschreduktion für ein Dentalinstrument möglichst effizient und einfach zu gestalten.

Diese Aufgabe wird durch die Gesamtheit der Merkmale des Patentanspruchs 1 gelöst. Ein die Aufgabe lösendes Verfahren ergibt sich aus der Gesamtheit der Merkmale des Patentanspruchs 7.

Mit anderen Worten weist die Vorrichtung folgende Merkmale auf:
- der Schallsensor ist an einem Bereich des Dentalinstruments angeordnet, der sich während der Behandlung des Patienten mit dem Dentalinstrument in der Mundhöhle oder nahe der Mundöffnung des Patienten befindet;
- der Schallerzeuger ist an einem Bereich des Dentalinstruments angeordnet, der sich während der Behandlung des Patienten mit dem Dentalinstrument in der Mundhöhle oder nahe der Mundöffnung des Patienten befindet;
- der Abstand zwischen Schallsensor und Schallerzeuger weist einen festen und bekannten Wert auf, der in dem Steuerungsmodul zur Berechnung der Signale zur aktiven Lärmkompensation abgespeichert ist;
- der Schallsensor und Schallerzeuger sind ortsfest in der Oberfläche des Dentalinstruments angeordnet.

Der Schallsensor wird folglich am vorderen Ende des Dentalinstruments angebracht. Wenn das Dentalinstrument ein Bohrer ist (Handstück oder Winkelstück mit Antriebsmotor oder zahnärztlicher Turbine und Werkzeug), werden die Schallsensoren vorzugsweise am Kopf des Bohrers angebracht, an dem das Bohrwerkzeug angeordnet ist. Wenn das Dentalinstrument ein Speichelabsauger ist, wird der Schallsensor vorzugsweise im Bereich der Öffnung angeordnet, durch die der Speichel in das Innere des rohrförmigen Speichelabsaugers eingesaugt wird.

Das Messen des Schalls im Bereich seiner Entstehung, das heißt in der Mundhöhle oder in unmittelbarer Nähe zur Mundöffnung, ermöglicht es, die Schallsignale an der Quelle der Geräusche zu berücksichtigen. Wie weiter unten detailliert beschrieben wird, kann hierdurch auch eine Geräuschkompensation an oder nahe der Quelle erfolgen, so dass die Geräuschreduktion nicht nur für eine Person wirksam ist, sondern der Lärmpegel in dem gesamten Behandlungsraum reduziert wird, weil von dem Behandlungsort, also dem Mund des Patienten, weniger Schall abgestrahlt wird.

Als Schallsensor können in der Praxis zum Beispiel folgende Bauelemente verwendet werden:
- piezoelektrischer Schallsensor;
- Beschleunigungssensor.

Bei einem piezoelektrischen Schallsensor wird ein piezoelektrisches Bauelement aufgrund des Schalldrucks verformt und erfasst so den genauen Verlauf der Schallwellen. Zusätzlich oder alternativ kann auch die Beschleunigung des Dentalinstruments gemessen werden. Hierzu werden sogenannte Inertialsensoren (englisch: inertial measurement unit oder IMU) verwendet. Diese messen nicht den Verlauf der an dem Dentalinstrument eintreffenden Schallwellen sondern vielmehr die Beschleunigungen des Dentalinstruments, die insbesondere in dem Abschnitt des Dentalinstruments in oder nahe der Mundhöhle wirken. In Kenntnis der Geometrie und der Masse des Dentalinstruments lassen sich aus der gemessenen Beschleunigung des Dentalinstruments die Schallwellen ermitteln, die durch die Bewegung des Dentalinstruments angeregt werden. Vorzugsweise werden die Beschleunigungen in Richtung aller drei Raumachsen gemessen, um die Schallerzeugung präzise bestimmen zu können. Zusätzlich können auch Rotationsbeschleunigungen des Dentalinstruments gemessen werden. Beschleunigungssensoren können beispielsweise mit piezokeramischen Sensorplättchen ausgestattet sein oder mikro-elektro-mechanische Systeme (MEMS) aufweisen, die meist aus Silizium bestehen und FederMasse-Systeme bilden. Die "Federn" sind in der Regel nur wenige µm breite Silizium-Stege. Auch die Masse ist aus Silizium hergestellt.

Es ist auch möglich, beide Sensortypen zu kombinieren. Schallsensoren mit Membranen erfassen das eintreffende Schallsignal. Diese Werte werden mit den Messwerten von Schallsensoren kombiniert, die die Beschleunigung des Dentalinstruments und damit die durch die Bewegung des Dentalinstruments erzeugten Schallwellen erfassen.

Der Abstand zwischen dem Schallsensor und dem Schallerzeuger weist einen bekannten und festen Wert auf, der in einem Datenspeicher des Steuerungsmoduls abgespeichert ist. Dies ermöglicht eine besonders zuverlässige Berechnung des Antischalls, der mittels destruktiver Interferenz die durch das Dentalinstrument selbst, aber auch durch die mechanische Behandlung des Zahns entstehenden Geräusche auslöscht. Der feste Abstandswert lässt sich bei neuen Dentalinstrumenten durch ortsfeste Anordnung von Schallsensor und Schallerzeuger in der Oberfläche des Dentalinstruments erzielen.

Für die korrekte Berechnung des Antischallsignals ist ferner die Schallgeschwindigkeit am Behandlungsort ausschlaggebend. Diese variiert mit der Temperatur, dem Luftdruck und der Luftfeuchtigkeit. Es kann der Vorrichtung ein Luftdrucksensor im Behandlungsraum zugeordnet werden, dessen Messwert bei der Berechnung der Schallgeschwindigkeit berücksichtigt wird. Für die Temperatur und/oder Luftfeuchtigkeit können entweder empirisch ermittelte Standardwerte angesetzt werden oder zusätzliche Messsensoren vorgesehen sein, die mit dem Steuerungsmodul verbunden sind.

Bei einer praktischen Ausführungsform können mehrere Schallsensoren in dem Bereich des Dentalinstruments angeordnet sein, der sich während der Arbeit mit dem Dentalinstrument in der Mundhöhle des Patienten befindet.

Ein Dentalinstrument erzeugt unterschiedliche Geräusche in verschiedenen Abstrahlrichtungen. Daher ermöglicht die Anordnung mehrerer Schallsensoren in der Mundhöhle des Patienten eine möglichst umfassende Erfassung sämtlicher relevanter Geräusche. Zudem erlaubt die Anordnung mehrerer Schallsensoren bei der Verwendung mehrerer Schallerzeuger, jedem einzelnen Schallerzeuger individuell einen Antischallsignalverlauf zuzuordnen, der in Abhängigkeit von den an verschiedenen Stellen aufgenommenen Schallsignalen berechnet wird. Der Antischallsignalverlauf ist in diesem Fall für die Position des jeweiligen Schallerzeugers optimiert.

Auch der Schallerzeuger ist in einem Bereich des Dentalinstruments angeordnet, der sich während der Arbeit mit dem Dentalinstrument in der Mundhöhle oder nahe der Mundöffnung des Patienten befindet. In Verbindung mit der Geräuscherfassung in der Mundhöhle oder nahe der Mundöffnung erlaubt die Geräuschreduktion in der Mundhöhle oder nahe der Mundöffnung eine effektive Kompensation und Reduktion des gesamten Schalls, der von dem Behandlungsort, das heißt dem Mund des Patienten aus, emittiert wird. Hierdurch wird der gesamte Lärmpegel in dem Behandlungsraum reduziert. Die Ohren des Patienten werden durch einen geringeren Geräuschpegel geschont. Das gleiche gilt für die Ohren des behandelnden Personals. Insbesondere das behandelnde Personal ist aufgrund des dauerhaften Einwirkens der Behandlungsgeräusche während der Arbeitszeit besonders gefährdet. Die Geräuschreduktion im Bereich der Mundhöhle oder im Bereich der Mundöffnung des Patienten reduziert diese Gefährdung ganz erheblich.

Wiederum können mehrere Schallerzeuger am Dentalinstrument angeordnet sein. Die mehreren Schallerzeuger sind ortsfest in einem Bereich in der Oberfläche des Dentalinstruments angeordnet, der sich während der Behandlung nahe der Mundöffnung des Patienten befindet.

In der Praxis können die Schallerzeuger von piezoelektrischen Lautsprechern gebildet werden. Piezoelektrische Lautsprecher weisen piezoelektrische Aktoren auf, die sich beim Anlegen einer elektrischen Spannung verformen. Piezoelektrische Lautsprecher sind robust und präzise in der Geräuschwiedergabe, so dass eine zuverlässige Antischallerzeugung erzielt werden kann. Sollte durch reine piezoelektrische Aktoren kein ausreichend großer Schalldruck erzeugt werden können, können Biegeaktoren verwendet werden. Es handelt sich dabei um Piezobiegeelemente mit mindestens einem passiven Metallsubstrat, auf dem ein aktiver Piezokeramikstreifen aufgebracht ist. Diese einlagigen Biegeelemente heißen bimorphe Wandler. Mehrlagige Aktoren mit mehreren Metallsubstraten und dazwischen liegenden Piezokeramikstreifen werden multimorphe Wandler genannt.

Auch der Schallsensor kann von einem piezoelektrischen Bauteil gebildet werden, insbesondere einem Mikrofon mit piezoelektrischem Element, welches beim Auftreffen von Schall verformt wird und aufgrund der Verformung entsprechende Spannungssignale erzeugt. Es sind aber auch alle anderen Schallsensoren und -erzeuger verwendbar, die in dem feuchten Behandlungsumfeld bei der Dentalbehandlung eine ausreichende Lebensdauer aufweisen.

Sowohl die Aktoren als auch die Sensoren können als Piezofolie ausgebildet sein. Piezofolien sind Filme aus hochpolarisiertem Polyvinylidenfluorid (PVDF). Sie können insbesondere für die Erzeugung des Antischalls als Aktoren verwendet werden. Piezofolien nehmen nur einen geringen Bauraum ein und sind sehr robust.

Wenn während der Behandlung eines Patienten mehrere Dentalinstrumente verwendet werden, beispielsweise ein Speichelsauger und ein Bohrer, kann jedes der verwendeten Dentalinstrumente mit einer derartigen Vorrichtung zur Geräuschreduktion versehen werden.

Die erfindungsgemäße Aufgabe wird ferner durch ein Verfahren zur Geräuschreduktion für ein Dentalinstrument gemäß der Gesamtheit der Merkmale des Patentanspruchs 7 gelöst.

Praktische Ausführungsformen und Vorteile der Erfindung sind nachfolgend im Zusammenhang mit den beigefügten Zeichnungen beschrieben.
Fig. 1 zeigt die Seitenansicht eines ersten erfindungsgemäßen Dentalinstruments, nämlich eines Winkelstücks für ein zahnärztliches Werkzeug, z. B. Bohrer.
Fig. 2 zeigt eine Draufsicht des zahnärztlichen Winkelstücks nach Figur 1.
Fig. 3 zeigt eine Seitenansicht eines zweiten erfindungsgemäßen Dentalinstruments, nämlich eines Speichelabsaugers.
Fig. 4 zeigt die Draufsicht des Speichelabsaugers nach Figur 3.

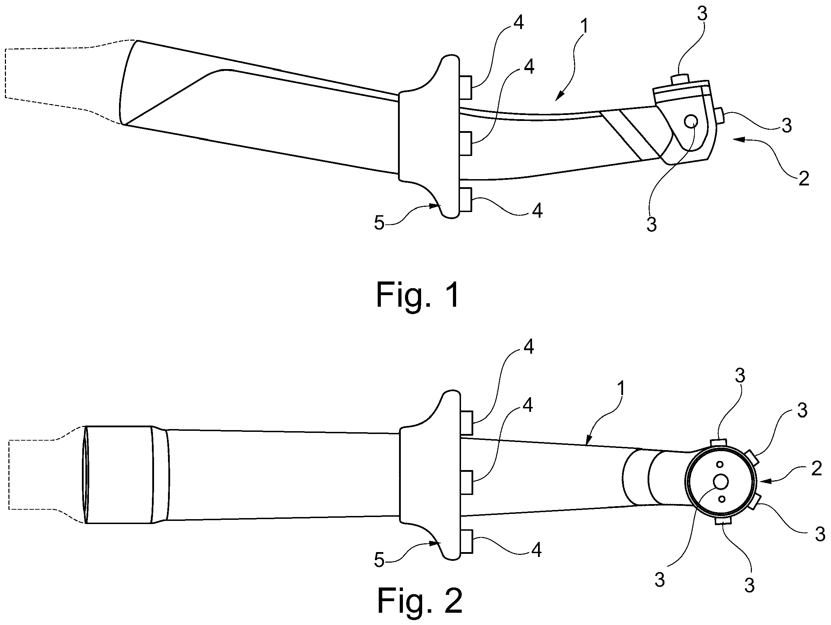

In den Figuren 1 und 2 ist ein zahnärztliches Winkelstück 1 zu erkennen, an dessen Kopf eine Aufnahme für ein zahnärztliches Werkzeug (nicht dargestellt) angeordnet ist. Der Antrieb für das zahnärztliche Werkzeug kann beispielsweise eine zahnärztliche Turbine oder ein Antriebsmotor sein. Das Werkzeug selbst ist meist ein Bohrer, Fräser oder Polierwerkzeug. Die erfindungsgemäße Vorrichtung ist aber selbstverständlich auch an einem geraden Handstück umsetzbar, an dem ein zahnärztliches Werkzeug befestigt wird.

Es ist zu erkennen, dass im Bereich des Kopfes 2 des Winkelstücks 1 am Umfang verteilte und auf der dem Werkzeug gegenüberliegenden Seite des Kopfes 2 angeordnete Schallsensoren 3 angebracht sind. Die Schallsensoren 3 sind ortsfest in der Oberfläche des Winkelstücks 1 eingebaut.

Die Schallsensoren 3 sind ortsfest in einem Bereich der Oberfläche des Winkelstücks 1 angeordnet, der sich während der Behandlung des Patienten in dessen Mundraum befindet.

Ferner zeigen die Figuren 1 und 2 einen Ring 5 mit Schallerzeugern 4, welche Antischall erzeugen.

Bei der dargestellten Ausführungsform erzeugen vier Schallerzeuger 4, die auf der zum Kopf 2 des Winkelstücks 1 hinweisenden Seite des Rings 5 angeordnet sind, Antischall, der den in der Mundhöhle entstehenden Schall auslöscht. Die Anzahl der Schallerzeuger kann bei anderen Ausführungsformen variieren. Die Schallerzeuger 4 sind während der Behandlung des Patienten in unmittelbarer Nähe zu dessen Mundöffnung oder bereits in dessen Mundöffnung angeordnet, so dass durch die Schallerzeuger 4 der Schall im Bereich der Mundhöhle ausgelöscht wird.

Die Schallerzeuger 4 werden in der Praxis von piezoelektrischen Aktoren gebildet, die bei Anlegung von elektrischer Spannung Form und Volumen ändern und so Schall erzeugen. Es werden in der Praxis auch piezoelektrische Sensoren als Schallsensoren 3 verwendet.

Die Schallsensoren 3 und die Schallerzeuger 4 sind über elektrische Leiter, die in oder an dem Winkelstück verlaufen, mit einem Steuerungsmodul (nicht dargestellt) verbunden, welches auf bekannte Weise die Schallsignale der Schallsensoren 3 auswertet und den Antischall, der durch die Schallerzeuger 4 abzustrahlen ist, berechnet.

Der Ring 5 mit den Schallerzeugern 4 ist ein fester Bestandteil des Winkelstücks 1. Es ist jedoch nicht erforderlich, die Schallerzeuger 4 an einem Ring 5 anzuordnen. Sie können auch auf geeignete Weise direkt in der Oberfläche des Winkelstücks 1 angeordnet werden.

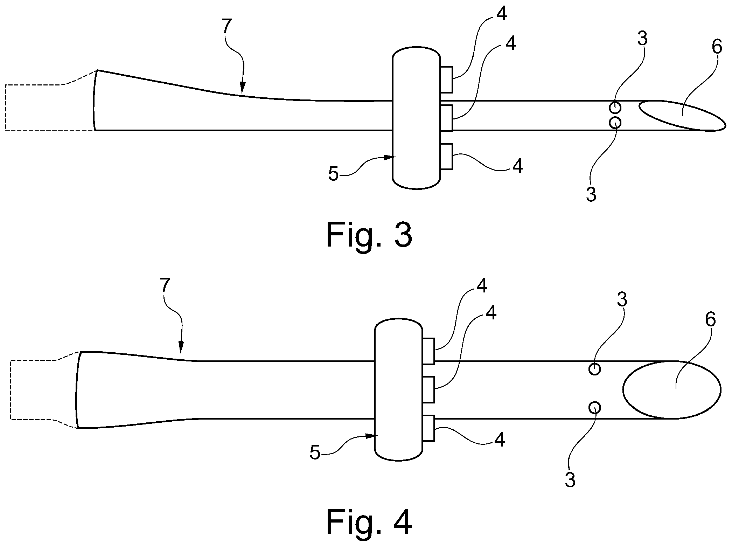

Die Figuren 3 und 4 zeigen eine entsprechende Vorrichtung zur Geräuschreduktion an einem Speichelabsauger 7. Die Schallsensoren 3 sind hier nahe der Öffnung 6 des Speichelabsaugers 7 angeordnet, die sich während der Behandlung in der Mundhöhle des Patienten befindet.

Wiederum ist innerhalb der Mundhöhle oder im Bereich der Mundöffnung ein Ring 5 vorgesehen, der die Schallerzeuger 3 trägt. Auch bei dieser Ausführungsform können die Schallerzeuger 3 direkt in der Oberfläche des Dentalinstruments (Speichelabsauger 7) angeordnet sein.

### Bezugszeichenliste

- 1: Winkelstück, Dentalinstrument
- 2: Kopf
- 3: Schallsensoren
- 4: Schallerzeuger
- 5: Ring
- 6: Öffnung
- 7: Speichelabsauger, Dentalinstrument

## Patentansprüche

1. Dentalinstrument (1, 7) mit einer Vorrichtung zur Geräuschreduktion zur zahnärztlichen Behandlung eines Patienten, mit
• mindestens einem am Dentalinstrument (1, 7) angeordneten Schallsensor (3),
• mindestens einem am Dentalinstrument (1, 7) angeordnetem Schallerzeuger (4),
• mindestens einem elektronischen Steuerungsmodul, welches mit dem Schallsensor (3) und dem Schallerzeuger (4) verbunden ist, um die von dem Schallsensor (3) aufgenommenen Schallsignale zu analysieren, Signale zur aktiven Lärmkompensation zu berechnen und zu dem Schallerzeuger (4) zu leiten,
wobei
- der Schallsensor (3) an einem Bereich des Dentalinstruments (1, 7) angeordnet ist, der sich während der Behandlung des Patienten mit dem Dentalinstrument (1, 7) in der Mundhöhle oder in unmittelbarer Nähe zu der Mundöffnung des Patienten befindet;
- der Schallerzeuger (4) mit einem Abstand zum Schallsensor (3) an einem Bereich des Dentalinstruments (1, 7) angeordnet ist, der sich während der der Behandlung des Patienten mit dem Dentalinstrument (1, 7) in der Mundhöhle oder nahe der Mundöffnung des Patienten befindet;
- der Abstand zwischen Schallsensor (3) und Schallerzeuger (4) einen festen und bekannten Wert aufweist, der in dem Steuerungsmodul zur Berechnung der Signale zur aktiven Lärmkompensation abgespeichert ist.
- **dadurch gekennzeichnet, dass** der Schallsensor (3) und der Schallerzeuger (4) ortsfest in der Oberfläche des Dentalinstruments (1, 7) angeordnet sind.

2. Dentalinstrument (1, 7) nach Anspruch 1, **dadurch gekennzeichnet, dass** es mindestens einen der folgenden Schallsensoren aufweist:
• piezoelektrischer Schallsensor;
• Beschleunigungssensor.

3. Dentalinstrument (1, 7) nach einem der vorangehenden Ansprüche, **dadurch gekennzeichnet, dass** mehrere Schallsensoren (3) an dem Bereich des Dentalinstruments (1, 7) angeordnet sind, der sich während der Arbeit mit dem Dentalinstrument (1,7) in der Mundhöhle des Patienten befindet.

4. Dentalinstrument (1, 7) nach einem der vorangehenden Ansprüche, **dadurch gekennzeichnet, dass** mehrere Schallerzeuger (4) an dem Bereich des Dentalinstruments (1, 7) angeordnet sind, der sich während der Arbeit mit dem Dentalinstrument (1, 7) in der Mundhöhle oder nahe der Mundöffnung des Patienten befindet.

5. Dentalinstrument (1, 7) nach einem der vorangehenden Ansprüche, **dadurch gekennzeichnet, dass** der Schallerzeuger (4) von einem piezoelektrischen Aktor (3) gebildet wird.

6. System zur Geräuschreduktion bei einer zahnmedizinischen Behandlung, bei der mindestens folgende Dentalinstrumente verwendet werden:
• ein Speichelsauger (7) und
• ein Handstück oder Winkelstück (1),
**dadurch gekennzeichnet, dass** mindestens ein verwendetes Dentalinstrument und vorzugsweise sowohl der Speichelsauger (7) als auch das Handstück oder Winkelstück (1) ein Dentalinstrument gemäß einem der vorangehenden Ansprüche ist.

7. Verfahren zur Geräuschreduktion für mindestens ein Dentalinstrument (1, 7) zur zahnärztlichen Behandlung eines Patienten, bei dem
• an mindestens einem Dentalinstrument (1, 7) mindestens ein Schallsensor (3) angeordnet wird,
• an mindestens einem Dentalinstrument (1,7) mindestens ein Schallerzeuger (4) angeordnet wird,
• mindestens ein elektronisches Steuerungsmodul mit dem Schallsensor (3) und dem Schallerzeuger (4) verbunden wird, um die von dem Schallsensor (3) aufgenommenen Schallsignale zu analysieren, Signale zur aktiven Lärmkompensation zu berechnen und zu dem Schallerzeuger (4) zu leiten,
wobei
- der Schallsensor (3) an einem Bereich des Dentalinstruments (1, 7) angeordnet wird, der sich während der Behandlung des Patienten mit dem Dentalinstrument (1, 7) in der Mundhöhle oder in unmittelbarer Nähe zu der Mundöffnung des Patienten befindet, um den entstehenden Schall in der Mundhöhle oder im Bereich der Mundöffnung zu erfassen;
- der Schallerzeuger (4) mit einem Abstand zum Schallsensor (3) an einem Bereich des Dentalinstruments (1, 7) angeordnet wird, der sich während der Behandlung des Patienten mit dem Dentalinstrument (1, 7) in der Mundhöhle oder nahe der Mundöffnung des Patienten befindet, um den entstehenden Schall durch Antischall in der Mundhöhle oder im Bereich der Mundöffnung zu reduzieren;
- der Abstand zwischen Schallsensor (3) und Schallerzeuger (4) einen festen und bekannten Wert aufweist, der in dem Steuerungsmodul zur Berechnung der Signale zur aktiven Lärmkompensation abgespeichert wird,
**dadurch gekennzeichnet, dass** der Schallsensor (3) und der Schallerzeuger (4) ortsfest in der Oberfläche des Dentalinstruments (1, 7) angeordnet werden.

## Claims

1. A dental instrument (1, 7) for dental treatment of a patient having a noise reduction device, comprising
• at least one sound sensor (3) arranged on the dental instrument (1, 7),
• at least one sound generator (4) arranged on the dental instrument (1, 7),
• at least one electronic control module connected to the sound sensor (3) and the sound generator (4) for analyzing the sound signals captured by the sound sensor (3), calculating signals for active noise compensation and transmitting these signals to the sound generator (4),
wherein
- the sound sensor (3) is arranged on a portion of the dental instrument (1, 7) that is located in the oral cavity or in close proximity to the mouth opening of the patient during the treatment of the patient with the dental instrument (1, 7);
- the sound generator (4) is arranged at a distance from the sound sensor (3) on a portion of the dental instrument (1, 7) that is located in the oral cavity or close to the mouth opening of the patient during the treatment of the patient with the dental instrument (1, 7);
- the distance between the sound sensor (3) and the sound generator (4) has a fixed and known value that is saved in the control module for calculating the signals for active noise compensation;
- **characterised in that** the sound sensor (3) and the sound generator (4) are fixedly arranged in the surface of the dental instrument (1, 7).

2. The dental instrument (1, 7) according to claim 1, **characterised in that** it comprises at least one of the following sound sensors:
• a piezoelectric sound sensor;
• an acceleration sensor.

3. The dental instrument (1, 7) according to any one of the preceding claims, **characterised in that** several sound sensors (3) are arranged on the portion of the dental instrument (1, 7) that is located in the oral cavity of the patient while working with the dental instrument (1, 7).

4. The dental instrument (1, 7) according to any one of the preceding claims, **characterised in that** several sound generators (4) are arranged on the portion of the dental instrument (1, 7) that is located in the oral cavity or close to the mouth opening of the patient while working with the dental instrument (1, 7).

5. The dental instrument (1, 7) according to anyone of the preceding claims, **characterised in that** the sound generator (4) is formed by a piezoelectric actuator (3).

6. A system for noise reduction during a dental treatment wherein at least the following dental instruments are used:
• a saliva ejector (7) and
• a straight or contra-angle handpiece (1),
**characterised in that** at least one dental instrument used and preferably both the saliva ejector (7) and the straight or contra-angle handpiece (1) are a dental instrument according to any one of the preceding claims.

7. A process for noise reduction for at least one dental instrument (1, 7) for dental treatment of a patient wherein
• at least one sound sensor (3) is arranged on at least one dental instrument (1, 7),
• at least one sound generator (4) is arranged on at least one dental instrument (1, 7),
• at least one electronic control module is connected to the sound sensor (3) and the sound generator (4) for analyzing the sound signals captured by the sound sensor (3), calculating signals for active noise compensation and transmitting these signals to the sound generator (4),
wherein
- the sound sensor (3) is arranged on a portion of the dental instrument (1, 7) that is located in the oral cavity or in close proximity to the mouth opening of the patient during the treatment of the patient with the dental instrument (1, 7) for sensing the noise generated in the oral cavity or in the area of the mouth opening;
- the sound generator (4) is arranged at a distance from the sound sensor (3) on a portion of the dental instrument (1, 7) that is located in the oral cavity or close to the mouth opening of the patient during the treatment of the patient with the dental instrument (1, 7) for reducing the noise generated in the oral cavity or in the area of the mouth opening by anti-sound;
- the distance between the sound sensor (3) and the sound generator (4) has a fixed and known value that is saved in the control module for calculating the signals for active noise compensation,
- **characterised in that** the sound sensor (3) and the sound generator (4) are fixedly arranged in the surface of the dental instrument (1, 7).

## Revendications

1. Instrument dentaire (1, 7) ayant un dispositif de réduction du bruit destiné au traitement des dents d'un patient, comportant
• au moins un capteur de son (3) disposé au niveau de l'instrument dentaire (1, 7),
• au moins un générateur de son (4) disposé au niveau de l'instrument dentaire (1, 7),
• au moins un module de commande électronique qui est connecté au capteur de son (3) et au générateur de son (4) pour analyser les signaux sonores reçus par le capteur de son (3), pour calculer des signaux pour activer une compensation de bruit, et les conduire jusqu'au générateur de son (4),
dans lequel
- le capteur de son (3) est disposé dans une zone de l'instrument dentaire (1, 7) qui est située dans la cavité buccale ou à proximité immédiate de la bouche du patient pendant le traitement du patient avec l'instrument dentaire (1, 7) ;
- le générateur de son (4) est disposé à une distance du capteur de son (3) au niveau d'une zone de l'instrument dentaire (1, 7) qui est située dans la cavité buccale ou à proximité de la bouche du patient pendant le traitement du patient avec l'instrument dentaire (1, 7) ;
- la distance entre le capteur de son (3) et le générateur de son (4) a une valeur fixe et connue, qui est stockée dans le module de commande pour le calcul des signaux de compensation active du bruit,
- **caractérisé en ce que** le capteur de son (3) et le générateur de son (4) sont agencés de manière fixe à la surface de l'instrument dentaire (1, 7).

2. Instrument dentaire (1, 7) selon la revendication 1, **caractérisé en ce qu'**il comprend au moins l'un des capteurs de son suivants :
• capteur de son piézoélectrique ;
• accéléromètre.

3. Instrument dentaire (1, 7) selon l'une quelconque des revendications précédentes, **caractérisé en ce que** plusieurs capteurs de son (3) sont agencés dans la zone de l'instrument dentaire (1, 7) qui est située dans la cavité buccale du patient lors du travail avec l'instrument dentaire (1, 7).

4. Instrument dentaire (1, 7) selon l'une quelconque des revendications précédentes, **caractérisé en ce que** plusieurs générateurs de son (4) sont agencés dans la zone de l'instrument dentaire (1, 7) qui, lors du travail avec l'instrument dentaire (1, 7), est située dans la cavité buccale ou à proximité de la bouche du patient.

5. Instrument dentaire (1, 7) selon l'une quelconque des revendications précédentes, **caractérisé en ce que** le générateur de son (4) est formé par un actionneur piézoélectrique (3).

6. Système de réduction du bruit dans un traitement médical de dents dans lequel au moins les instruments dentaires suivants sont utilisés :
• un aspirateur de salive (7) et
• une pièce à main ou un contre-angle (1),
**caractérisé en ce qu'**au moins un instrument dentaire et de préférence à la fois l'aspirateur de salive (7) de même que la pièce à main ou le contre-angle (1) est un instrument dentaire selon l'une quelconque des revendications précédentes.

7. Procédé de réduction du bruit d'au moins un instrument dentaire (1, 7) destiné au traitement des dents d'un patient, dans lequel
• au moins un capteur de son (3) est agencé au niveau du au moins un instrument dentaire (1, 7),
• au moins un générateur de son (4) est agencé au niveau du au moins un instrument dentaire (1, 7),
• au moins un module de commande électronique est connecté au capteur de son (3) et au générateur de son (4) pour analyser les signaux sonores reçus du capteur de son (3), pour calculer des signaux pour activer une compensation de bruit, et les conduire jusqu'au générateur de son (4),
dans lequel
- le capteur de son (3) est disposé dans une zone de l'instrument dentaire (1, 7) qui est située dans la cavité buccale ou à proximité immédiate de la bouche du patient pendant le traitement du patient avec l'instrument dentaire (1, 7), pour détecter le son généré dans la cavité buccale ou à proximité de la bouche ;
- le générateur de son (4) est disposé à une distance du capteur de son (3) au niveau d'une zone de l'instrument dentaire (1, 7) qui est située dans la cavité buccale ou à proximité de la bouche du patient pendant le traitement du patient avec l'instrument dentaire (1, 7) ; pour réduire le son généré par un contrôle actif du bruit dans la cavité buccale ou à proximité de la bouche ;
- la distance entre le capteur de son (3) et le générateur de son (4) a une valeur fixe et connue qui est stockée dans le module de commande pour calculer les signaux de compensation active du bruit,
**caractérisé en ce que** le capteur de son (3) et le générateur de son (4) sont agencés de manière fixe à la surface de l'instrument dentaire (1, 7).
